# EUROPÄISCHE PATENTSCHRIFT

(11) **EP 3 737 601 B1**
(45) Veröffentlichungstag und Bekanntmachung des Hinweises auf die Patenterteilung: **04.05.2022**
(21) Anmeldenummer: 18829754.3
(22) Anmeldetag: 10.12.2018
(51) Int. Cl.: B62D 21/15, B60R 19/34, B62D 25/08

(54) **KAROSSERIESTRUKTUR UND KAROSSERIE FÜR EINEN PERSONENKRAFTWAGEN**
BODY STRUCTURE AND BODY FOR A PASSENGER CAR
STRUCTURE DE CARROSSERIE ET CARROSSERIE POUR UNE VOITURE PARTICULIÈRE

(30) Priorität: 08.01.2018 DE 102018000065
(43) Veröffentlichungstag der Anmeldung: 18.11.2020
(73) Patentinhaber: Mercedes-Benz Group AG, 70372 Stuttgart (DE)
(72) Erfinder: CARL, Michael, 70839 Gerlingen (DE); RUDLOF, Volker, 72414 Rangendingen (DE); DÖRR, Daniel, 70190 Stuttgart (DE)
(74) Vertreter: JENSEN & SON
(86) Internationale Anmeldenummer: PCT/EP2018/084082
(87) Internationale Veröffentlichungsnummer: WO 2019/134785

(56) Entgegenhaltungen:
- DE-A1-102006 038 674
- DE-A1-102015 016 186
- JP-A- 2017 226 269
- US-A1- 2010 171 340

## Beschreibung

Die Erfindung betrifft eine Karosseriestruktur für einen Personenkraftwagen gemäß Oberbegriff von Anspruch 1, sowie eine Karosserie für einen Personenkraftwagen.

Derartige Karosseriestrukturen für Personenkraftwagen sind aus dem Serienfahrzeugbau hinlänglich bekannt. Eine solche Karosseriestruktur umfasst üblicherweise zwei in Fahrzeugquerrichtung voneinander beabstandete Längsträger, welche beispielsweise einer Längsträgerebene zugeordnet sind. Außerdem umfasst die Karosseriestruktur wenigstens eine sich in Fahrzeuglängsrichtung an die Längsträger anschließende beziehungsweise auf die Längsträger folgende Biegequerträgereinrichtung, welche einen sich zumindest in Fahrzeugquerrichtung erstreckenden Biegequerträger und je Längsträger wenigstens ein auch als Crashbox bezeichnetes Energieabsorptionselement aufweist. Das jeweilige Energieabsorptionselement ist an dem jeweils zugeordneten Längsträger in einer Befestigungsebene befestigt. Außerdem ist der Biegequerträger an den Energieabsorptionselementen befestigt, sodass der Biegequerträger unter Vermittlung der Energieabsorptionselemente an die jeweiligen Längsträger angebunden ist. Dadurch kann beispielsweise der Biegequerträger unfallbedingte Lasten aufnehmen, in Fahrzeugquerrichtung verteilen und auf die Energieadsorptionselemente übertragen, sodass der Biegequerträger und insbesondere die Energieabsorptionselemente unter Energieverzehrung verformt werden. Hierdurch kann Unfallenergie abgebaut beziehungsweise absorbiert werden.

Durch die Integration von zusätzlichen Komponenten wie beispielsweise einer dritten Sitzreihe und/oder Hochvoltkomponenten für Elektro- oder Hybridfahrzeuge in eine bestehende Rohbauplattform kann der bei einem Unfall zum Energieabbau zur Verfügung stehende Deformationsbereich im Front- oder Heckbereich des Kraftwagens stark eingeschränkt werden, sodass es wünschenswert ist, im Falle eines Unfalls Intrusionen besonders gering zu halten, um Insassen des Personenkraftwagens und/oder die genannten Hochvolt-Komponenten zu schützen. Durch eine immer stärkere Verblockung von Fahrzeugen auf einer gemeinsamen Karosserieplattform ist es ferner wünschenswert, eine solche Schutzfunktion auch bei Fahrzeugvarianten mit hoher Standhöhe, wie beispielsweise SUVs zu realisieren, selbst wenn eine bestehende Längsträgerstruktur im Falle eines Unfalls durch ein Unfallhindernis unterfahren wird. Ziel dabei ist es, Deformationen in Fahrzeughochrichtung (z-Richtung) und in Fahrzeuglängsrichtung (x-Richtung) besonders gering zu halten, ohne jedoch Bauraum oberhalb der Längsträger übermäßig zu reduzieren.

Aus der DE 10 2006 038 674 A1 geht ein Kraftfahrzeug mit zumindest einem hohlen Längsträger hervor, an dessen Ende ein Stoßfänger oder alternativ ein Frontmodul oder ein Heckmodul anzubringen ist.

Aus der JP 2017 226269 A geht eine Karosseriestruktur gemäß dem Oberbegriff des Anspruch 1 hervor. Diese Struktur umfasst zwei in Fahrzeugquerrichtung voneinander beabstandete Tragwerksstrukturen, welche Y-förmig ausgebildet und in Bezug auf die Fahrzeuglängsrichtung V-förmig angeordnet sind. An den beiden Tragwerkstrukturen ist endseitig ein Biegequerträger einer Stoßfängeranordnung gehalten. Zwischen den Tragwerkstrukturen ist eine diese miteinander verbindende, endseitig jeweils abgewinkelte Strebe befestigt, welche bei einer teilüberdeckten Frontalkollision des Kraftfahrzeugs einem Aufspreizen der Tragwerkstrukturen entgegenwirkt.

Aufgabe der vorliegenden Erfindung ist es, eine Karosseriestruktur und eine Karosserie der eingangs genannten Art derart weiterzuentwickeln, dass sich auf besonders bauraumgünstige Weise ein besonders vorteilhaftes Unfallverhalten realisieren lässt. Diese Aufgabe wird erfindungsgemäß durch eine Karosseriestruktur mit den Merkmalen des Anspruchs 1 sowie durch eine Karosserie mit den Merkmalen des Anspruchs 13 gelöst. Vorteilhafte Ausgestaltungen mit zweckmäßigen Weiterbildungen der Erfindung sind in den übrigen Ansprüchen angegeben.

Die Karosseriestruktur ist Teil eines Karosserierohbaus eines Personenkraftwagens und umfasst zwei in Fahrzeugquerrichtung voneinander beabstandete Längsträger, welche sich im Vorbau oder im Heckwagenbereich befinden können. Des Weiteren ist wenigstens eine sich in Fahrzeuglängsrichtung an die Längsträger anschließende Biegequerträgereinrichtung vorgesehen, welche Teil einer Stoßfängeranordnung ist und einen ersten Biegequerträger sowie an den Längsträgern befestigte, häufig auch als Crashboxen bezeichnete Energieabsorptionselemente umfasst, über welche der erste Biegequerträger an den jeweiligen Längsträger angebunden, das heißt vorzugsweise zerstörungsfrei lösbar befestigt ist. Die Karosseriestruktur zeichnet sich dadurch aus, dass ein Tragwerk vorgesehen ist, welches zwischen den Längsträgern und - in Fahrzeughochrichtung gesehen - auf Höhe der Längsträger angeordnet ist, wobei das Tragwerk einen zweiten, zumindest mittelbar an die Längsträger angebundenen, in Draufsicht auf die Karosseriestruktur gesehen zur Fahrzeugaußenseite in Richtung zum ersten Biegequerträger hin konvex gekrümmten Biegequerträger aufweist. Der zweite Biegequerträger ist also in Richtung der bei einem endseitigen Fahrzeuganprall einwirkenden Aufpralllast konvex und somit in Fahrzeuglängsrichtung nach außen gekrümmt. Durch diese nach außen gekrümmte, vorzugsweise bogenförmige Form des zweiten Biegequerträgers wird eine zumindest im Wesentlichen in Fahrzeuglängsrichtung wirkende, unfallbedingte Kraft in eine zumindest im Wesentlichen in Fahrzeugquerrichtung, insbesondere nach außen wirkende Kraft übertragen beziehungsweise umgewandelt, wodurch die Längsträger durch die Anbindung des Tragwerks in Fahrzeugquerrichtung, insbesondere nach außen, kraftbeaufschlagt und bei Überschreiten einer Grenzkraft auch deformiert werden. Mittels des erfindungsgemäßen Tragwerks, das heißt also des zusätzlichen, inneren zweiten Biegequerträgers werden die bestehenden Längsträgerstrukturen in der sich im üblichen Fahrzeugkoordinatensystem in Fahrzeuglängsrichtung (x-Richtung) und Fahrzeughochrichtung (z-Richtung) aufspannenden xz-Ebene miteinander verbunden, wodurch im Crashfall ein frühzeitiges Ausknicken der Längsträger vermieden und insbesondere bei einer Teilüberdeckung mit dem Kollisionspartner gleichzeitig die Unfallenergie besser auf die stoßabgewandte Seite übertragen wird, wodurch die Gesamtintrusion ins Fahrzeug minimiert wird und die entstehende Crashenergie im verbleibenden Deformationsbereich abgebaut werden kann. Der zum ersten Biegequerträger hin konvex gekrümmte, bogenförmige zweite Biegequerträger wird bei einer in Fahrzeuglängsrichtung wirkenden Anprallkraft also quasi auseinandergedrückt, so dass die Krafteinleitung in die Längsträger zumindest auch in Fahrzeugquerrichtung (y-Richtung) erfolgt. Der sich aufbauende Lastpfad erfährt hier also eine Umlenkung aus der x-Richtung heraus in Fahrzeugquerrichtung hin zu den Längsträgern. Das Tragwerk weist einen in Fahrzeuglängsrichtung zwischen dem ersten Biegequerträger und dem zweiten Biegequerträger angeordneten, sich in Fahrzeugquerrichtung erstreckenden Lastverteiler auf, über welchen beispielsweise auf den Lastverteiler wirkende unfallbedingte Lasten besonders vorteilhaft in Fahrzeugquerrichtung verteilt und auf den zweiten Biegequerträger übertragen werden können.

Besonders bevorzugt wird ein Ausführungsbeispiel der Karosseriestruktur, bei dem der Lastverteiler am zweiten Biegequerträger so befestigt oder ausgebildet ist, dass die freien Enden des Lastverteilers verbindungsfrei zu den Längsträgern sind. Das heißt, der Lastverteiler weist in am Fahrzeug montierten Zustand keine direkte, Querkräfte aufnehmende beziehungsweise in Längsträger einleitende Verbindung zu den Längsträgern auf. Zumindest die Endbereiche des Lastverteilers kragen links und rechts von der Anbindungsstelle beziehungsweise -stellen am zweiten Biegequerträger frei in Richtung der Längsträger aus. Gemäß einer bevorzugten, ersten Ausführungsvariante ist der Lastverteiler am zweiten Biegequerträger befestigt, während gemäß einer zweiten Ausführungsvariante der Lastverteiler am zweiten Biegequerträger ausgebildet, beispielsweise angeformt ist.

Bei einem vorteilhaften Ausführungsbeispiel der Karosseriestruktur ist vorgesehen, dass der Lastverteiler zumindest mittelbar, insbesondere direkt, an einer in Fahrzeuglängsrichtung dem ersten Biegequerträger zugewandten Stirnseite des zweiten Biegequerträgers befestigt ist. Diese Stirnseite bildet beziehungsweise ist der Bogenrücken des gekrümmten/gebogenen zweiten Biegequerträgers. Hierdurch kann der Lastverteiler besonders vorteilhaft unfallbedingten Lasten aufnehmen, verteilen und auf den zweiten Biegequerträger übertragen, welcher dann die unfallbedingten Lasten seinerseits aufnehmen, verteilen und gezielt führen kann. Die Befestigungsstelle beziehungsweise der Befestigungsabschnitt des Lastverteilers am zweiten Biegequerträger befindet sich gemäß einem vorteilhaften Ausführungsbeispiel im Bereich des Scheitelpunkts beziehungsweise des Scheitelpunktabschnitts des Lastverteilers, also in dem Bereich, der dem ersten Biegequerträger am nächsten ist.

Grundsätzlich ist es möglich, dass der Lastverteiler balkenförmig ausgebildet ist. Dabei kann der Aufbau des Lastverteilers ähnlich einem Karosserieträger sein, also beispielsweise als Hohlprofil, das beispielsweise einstückig als Strangpressprofil oder mehrteilig, insbesondere in Schalenbauweise ausgeführt ist. Der Lastverteiler kann gerade ausgebildet sein oder aber in Fahrzeugquerrichtung eine gewisse Krümmung aufweisen, wobei die Ausrichtung der Krümmung in die gleiche Richtung gerichtet ist, wie die des konvex gekrümmten zweiten Biegequerträgers.

Eine weitere vorteilhafte Ausführungsform der Erfindung zeichnet sich dadurch aus, dass der Lastverteiler einteilig ausgebildet ist. Hierbei ist der Lastverteiler als genau eine Baueinheit ausgebildet, welche als Ganzes gehandhabt und montiert werden kann. Alternativ ist es vorgesehen, dass der Lastverteiler mehrteilig ausgebildet ist und somit beispielsweise mehrere, das heißt wenigstens zwei separat voneinander ausgebildete und beispielsweise vollständig voneinander beabstandete Lastverteilerteile aufweist, wodurch die Aufnahme und Führung von unfallbedingten Lasten gezielt eingestellt werden kann.

Besonders bevorzugt wird ein Ausführungsbeispiel der Karosseriestruktur, bei dem der zweite Biegequerträger so an den Längsträgern angebunden ist, dass sich bei einer in Fahrzeuglängsrichtung wirkenden Kraftbeaufschlagung des zweiten Biegequerträgers ein Lastpfad über diesen auf jeweilige, in Fahrzeugquerrichtung nach innen weisende Innenseiten der jeweiligen Längsträger ausbilden kann. Hierzu ist der zweite Biegequerträger entweder unmittelbar, das heißt direkt, oder mittelbar, beispielsweise unter Zuhilfenahme von Befestigungskonsolen, an der jeweiligen Innenseite der Längsträger befestigt.

Bei einer anderen Ausführungsvariante ist eine Anbindung des zweiten Biegequerträgers an der Oberseite und/oder der Unterseite der Längsträger vorgesehen, wobei auch hier die Anbindung so ist, dass im Crashfall sich jeweils ein Lastpfad vom zweiten Biegequerträger seitlich in die Längsträger über deren einander zugewandten Innenseiten aufbauen kann. Hierzu ist es erforderlich, dass die Endbereiche des zweiten Biegequerträgers auf Höhe der Längsträger in zumindest teilweiser Gegenüberlage zu den Längsträgerinnenseiten gehalten sind.

Bei einem ersten Ausführungsbeispiel der Karosseriestruktur ist vorgesehen, dass das Tragwerk und somit der Lastverteiler und der zweite Biegequerträger in Fahrzeuglängsrichtung innenseitig einer Befestigungsebene der Energieabsorptionselemente an den Längsträgern angeordnet sind, sodass beispielsweise dann, wenn die erfindungsgemäße Karosseriestruktur an der Front des Personenkraftwagens vorgesehen ist, die Befestigungsebene in Fahrzeuglängsrichtung weiter vorne als das Tragwerk angeordnet ist. Unter dem Begriff "Befestigungsebene" ist in diesem Zusammenhang ein räumlich sich in Fahrzeuglängsrichtung erstreckender Bereich/Abschnitt zu verstehen, der je nach Anbindungsart der Energieabsorptionselemente an die Längsträger, das heißt stirnseitig mittels einer Flanschverbindung oder in den Endbereich des hohlen Längsträgers eingeschoben und in Fahrzeugquerrichtung durch Sicherungsmittel im Überlappungsbereich fixiert, eine unterschiedliche Erstreckung aufweisen kann.

Bei einem anderen, besonders vorteilhaften Ausführungsbeispiel der Erfindung befindet sich der Lastverteiler im Bereich dieser Befestigungsebene, das heißt der Lastverteiler befindet sich zwischen oder zumindest teilweise zwischen den Energieabsorptionselementen und -in Fahrzeughochrichtung gesehen- auch auf Höhe derselben. und damit vorzugsweise in einem Bereich der Energieabsorptionselemente, in welchen diese sich bei einem Anprall nicht verformen oder bereits auf Block verformt sind. Der Lastverteiler wird also bei einem sogenannten Reparaturcrash, beispielsweise dem standardisierten RCAR-Crashtest (Research Council for Automobile Repairs), vorzugsweise nicht kraftbeaufschlagt oder zumindest mit nur so geringen Kräften, dass dieser vorzugsweise nicht ausgetauscht werden muss. Die energieverzehrende Deformation der Energieabsorptionselemente wird durch den Lastverteiler also nicht beeinflusst. Der Lastverteiler wird im Crashfall vielmehr erst dann mit in den Lastpfad eingebunden, wenn beim Überschreiten bestimmter, durch einen Anprall am Fahrzeug in die Rohbaustruktur eingeleiteter Crashkräfte die Deformationen des ersten Biegequerträgers und/oder der Energieabsorptionselemente entsprechend weit vorangeschritten sind.

Ist beispielsweise die erfindungsgemäße Karosseriestruktur am Heck des Personenkraftwagens vorgesehen, so ist beispielsweise die Befestigungsebene in Fahrzeuglängsrichtung weiter hinten als das Tragwerk beziehungsweise der zweite Biegequerträger angeordnet. Dies bedeutet, dass die erfindungsgemäße Karosseriestruktur sowohl für die Front als auch für das Heck des Personenkraftwagens zum Einsatz kommen kann, um dadurch auf bauraumgünstige Weise ein besonders vorteilhaftes Unfallverhalten realisieren zu können. Das erfindungsgemäß vorgesehene Tragwerk wird auch als Tragwerkstruktur bezeichnet, über welche die beispielsweise eine Längsträgerstruktur bildenden Längsträger in einer auch als XZ-Ebene bezeichneten, durch die Fahrzeuglängsrichtung (x-Richtung) und die Fahrzeughochrichtung (z-Richtung) aufgespannte Ebene miteinander verbunden werden können, wodurch im Falle eines beispielsweise als Heck- oder Frontalaufprall ausgebildeten Unfalls ein frühzeitiges Ausknicken der bestehenden Längsträger vermieden wird und gleichzeitig Unfallenergie besonders vorteilhaft auf die stoßabgewandte Seite übertragen wird.

Hierdurch kann die Gesamtintrusion in den Personenkraftwagen besonders gering gehalten werden und die entstehende Unfallenergie kann in einem verbleibenden Deformationsbereich besonders vorteilhaft abgebaut beziehungsweise absorbiert und hierbei beispielsweise in Verformungsenergie umgewandelt werden. Durch das Tragwerk kann der Energieabbau über die Längsträger in Fahrzeuglängsrichtung verbessert werden. Zusätzlich kann Unfallenergie in Fahrzeugquerrichtung (y-Richtung) abgebaut werden, wodurch die Gesamtintrusion in den Personenkraftwagen beziehungsweise in dessen Innenraum besonders gering gehalten werden kann. Eine übermäßige Beeinflussung von Bauraum oberhalb der Längsträger kann dabei vermieden werden, sodass beispielsweise dieser Bauraum zur Unterbringung von weiteren Komponenten wie beispielsweise Hochvoltkomponenten oder einer dritten Sitzreihe zur Verfügung steht. Das erfindungsgemäß vorgesehene Tragwerk ermöglicht es insbesondere, einen beispielsweise durch die Integration zusätzlicher Komponenten wie beispielsweise einer dritten Sitzreihe und/oder von Hochvoltkomponenten für Elektro-Hybridfahrzeuge in eine bestehende Rohbauplattform stark eingeschränkt zur Verfügung stehenden Deformationsbereich zum Energieabbau bei einem Unfall besonders gut zu nutzen, sodass auch bei einem nur geringen zur Verfügung stehenden Deformationsbereich eine besonders großer Betrag an Unfallenergie absorbiert werden kann. Besonders vorteilhaft kann das Tragwerk für ein Elektrofahrzeug ohne Motoraggregat als Lastverteiler beziehungsweise zum Lastverteilen eingesetzt werden, ohne den gesamten Bauraum zwischen den Längsträgern übermäßig zu belasten.

Bei einer besonders vorteilhaften Ausführungsform der Erfindung weisen die Biegequerträger und der Lastverteiler zumindest in jeweiligen Längenbereichen jeweilige, sich entlang der Fahrzeuglängsrichtung gegenseitig zumindest teilweise überlappende Hohlquerschnitte, insbesondere geschlossene Hohlquerschnitte, auf. Mit anderen Worten ist es dabei vorgesehen, dass die Biegequerträger und der Lastverteiler in Fahrzeughochrichtung derart angeordnet sind, dass sich die Hohlquerschnitte entlang der Fahrzeuglängsrichtung gegenseitig überdecken beziehungsweise überlappen. Dadurch kann auch bei einem nur geringen, zur Verfügung stehenden Deformationsbereich eine besonders hohe Menge an Unfallenergie absorbiert werden, wodurch sich ein besonders vorteilhaftes Unfallverhalten realisieren lässt.

Um eine besonders vorteilhafte Führung und Ableitung von unfallbedingten Lasten und in der Folge ein besonders vorteilhaftes Deformationsverhalten realisieren zu können, ist es in weiterer Ausgestaltung der Erfindung vorgesehen, dass der Lastverteiler zumindest mittelbar, insbesondere direkt, an dem zweiten Biegequerträger befestigt ist.

In weiterer Ausgestaltung der Erfindung ist der zweite Biegequerträger zumindest mittelbar, insbesondere direkt, an jeweilige, in Fahrzeugquerrichtung nach innen weisende Innenseiten der jeweiligen Längsträger angebunden. Hierdurch kann eine besonders vorteilhafte Krafteinleitung in den Längsträger realisiert werden, sodass dessen Verformung beziehungsweise Verformungsverhalten bedarfsgerecht eingestellt werden kann.

Eine weitere vorteilhafte Ausführungsform der Erfindung sieht vor, dass der zweite Biegequerträger unter Vermittlung jeweiliger, separat von dem zweiten Biegequerträger und separat von den Längsträgern ausgebildeter und mit dem zweiten Biegequerträger und mit den Längsträgern verbundener Konsolen an die jeweiligen Längsträger angebunden ist. Auf diese Weise kann der zweite Biegequerträger gezielt und bedarfsgerecht an die Längsträger angebunden werden. Außerdem kann die Krafteinleitung in die Längsträger gezielt eingestellt werden.

Eine weitere Ausführungsform zeichnet sich dadurch aus, dass der zweite Biegequerträger einteilig und dadurch als genau eine, zusammenhängende Baueinheit ausgebildet ist. Auf diese Weise kann beispielsweise der zweite Biegequerträger als Ganzes gehandhabt und verbaut werden, sodass der zweite Biegequerträger zeit- und kostengünstig montiert werden kann. Außerdem kann dadurch ein vorteilhaftes Verformungsverhalten des zweiten Biegequerträgers realisiert werden.

Alternativ hat es sich als besonders vorteilhaft gezeigt, wenn der zweite Biegequerträger mehrteilig ausgebildet ist und dadurch wenigstens zwei separat voneinander ausgebildete Biegequerträgerteile aufweist, welche in Fahrzeugquerrichtung voneinander beabstandet angeordnet sind. Dadurch sind die Biegequerträgerteile in einem in Fahrzeugquerrichtung verlaufenden Abstand zueinander angeordnet, welcher vorzugsweise durch den Lastverteiler überbrückt ist. Dadurch ist der Lastverteiler sowohl an eines der Biegequerträgerteile als auch an das andere Biegequerträger angebunden, sodass sich eine besonders vorteilhafte Aufnahme, Übertragung, Führung und Abstützung von unfallbedingten Lasten realisieren lässt.

Zur Erfindung gehört auch eine Karosserie für einen Personenkraftwagen, mit einem Rohbau und mit einer erfindungsgemäßen Karosseriestruktur. Die Karosserie ist dabei insbesondere als selbsttragende Karosserie ausgebildet. Die vorstehend in dem Zusammenhang mit der erfindungsgemäßen Karosseriestruktur genannten Vorteile gelten in ebensolcher Weise für die erfindungsgemäße Karosserie.

Dabei hat es sich als besonders vorteilhaft gezeigt, wenn das Tragwerk zerstörungsfrei beziehungsweise reversibel lösbar an dem Rohbau befestigt ist. Das Tragwerk ist somit eine Montagelösung, mit welcher der Personenkraftwagen auf einfache Weise sowie bedarfsgerecht ausgestattet werden kann. Als Montagelösung kann das Tragwerk beispielsweise auch nur in solchen Fahrzeugen zum Einsatz kommen, welche bestimmte Ausstattungsvarianten wie beispielsweise eine dritte Sitzreihe aufweisen, wodurch eine Belastung des Grund- beziehungsweise Ecktyps des Karosserierohbaus hinsichtlich seines Gesamtgewichts vermieden werden kann. Sind beispielsweise mehrere, auf einer gemeinsamen Plattform basierende Fahrzeugvarianten vorgesehen, so ist es durch die Ausgestaltung des Tragwerks als Montagelösung auf einfache Weise möglich, zumindest einen ersten Teil der Fahrzeugvariante mit dem Tragwerk auszustatten, indem das Tragwerk einfach an dem jeweiligen Rohbau befestigt wird. Eine Ausstattung beziehungsweise Bestückung zumindest eines zweiten Teils der Fahrzeugvariante mit dem Tragwerk kann einfach unterbleiben, um dadurch beispielsweise den Ecktyp nicht zu belasten.

Der Gegenstand der Erfindung betrifft auch ein Montagebauteil für eine Karosseriestruktur nach einem der Ansprüche 1 bis 11, umfassend den zweiten Biegequerträger, welcher an seinen Enden mit jeweils einer Konsole zur Befestigung desselben an den Innenseiten der Längsträger eines Personenkraftwagens versehen ist, und den am zweiten Biegequerträger vorgesehenen Lastverteiler. Vorzugsweise wird das Montagebauteil in Fahrzeugquerrichtung mit den Längsträgern verschraubt.

Weitere Vorteile und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen, oder in Alleinstellung verwendbar, solange sie den Rahmen der Erfindung nicht verlassen, wie in den Ansprüchen beansprucht.

Dabei zeigen:
- Fig. 1: eine schematische Perspektivansicht auf eine Karosserie für einen Personenkraftwagen;
- Fig. 2: eine schematische Seitenansicht auf die Karosserie gemäß Fig. 1;
- Fig. 3: eine schematische Draufsicht auf die Karosserie gemäß den Fig. 1 und 2;
- Fig. 4: eine schematische Draufsicht auf den Frontbereich der Karosseriestruktur gemäß den Fig. 1 bis 3;
- Fig. 5: eine schematische Seitenansicht auf die Karosseriestruktur gemäß Fig. 4;
- Fig. 6: eine schematische Perspektivansicht auf das Tragwerk der Karosseriestruktur gemäß Fig. 4 und 5;
- Fig. 7: eine schematische Draufsicht auf das Tragwerk gemäß Fig. 6;
- Fig. 8: eine schematische Seitenansicht auf das Tragwerk gemäß Fig. 7;
- Fig. 9: eine schematische und geschnittene Seitenansicht der Karosseriestruktur gemäß Fig. 4,
- Fig. 10: eine weitere schematische Draufsicht auf die Karosseriestruktur gemäß Fig. 4;
- Fig. 11: eine schematische und geschnittene Seitenansicht auf die Karosseriestruktur am Heck der Karosserie;
- Fig. 12: eine schematische Draufsicht auf die Karosseriestruktur gemäß Fig. 11;
- Fig. 13: ausschnittsweise eine schematische Draufsicht auf die Karosserie in deren Heckbereich;
- Fig. 14: ausschnittsweise eine schematische Seitenansicht auf die Karosserie gemäß Fig. 13;
- Fig. 15: ausschnittsweise eine schematische und perspektivische Rückansicht auf die Karosserie; und
- Fig. 16: ausschnittsweise eine weitere schematische Seitenansicht auf die Karosserie in deren Heckbereich.

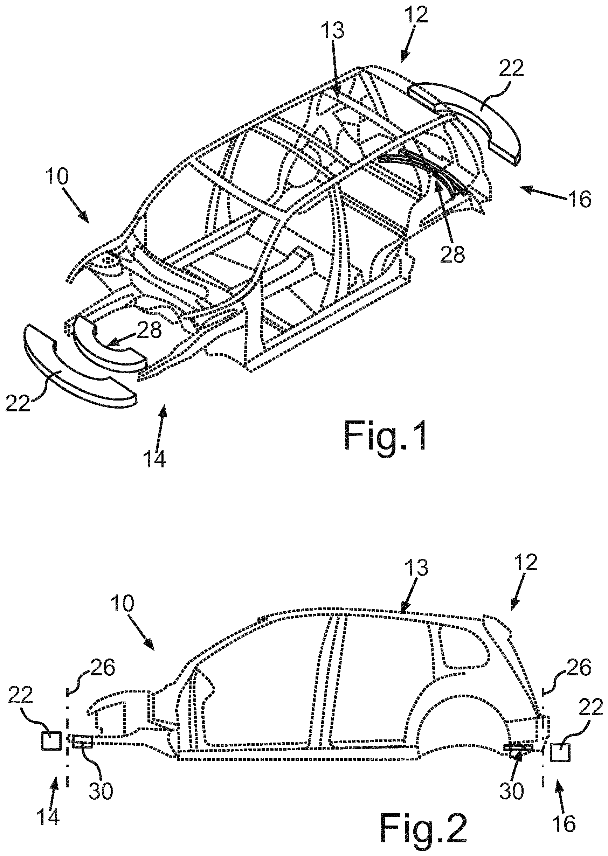

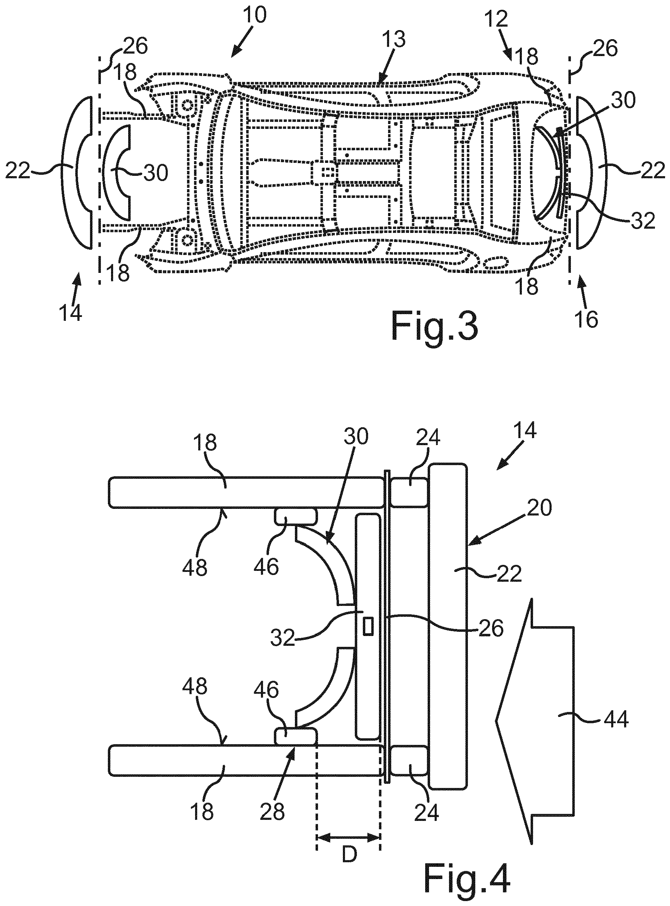

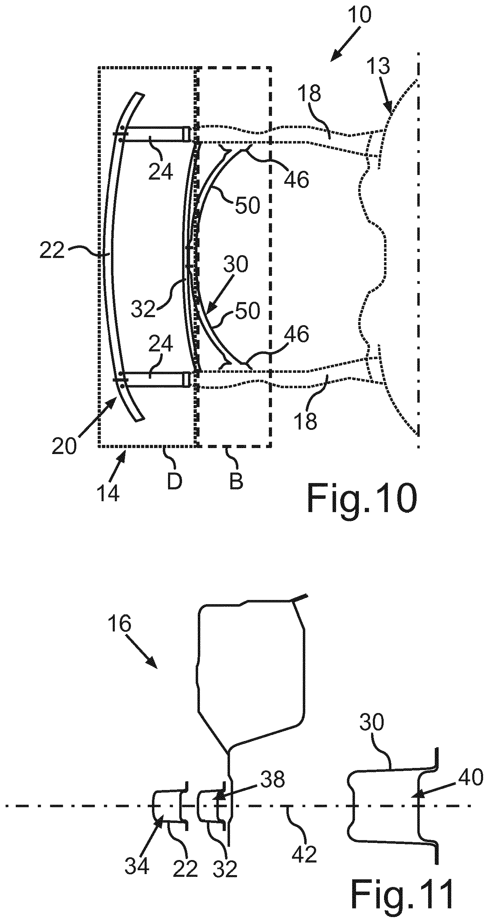

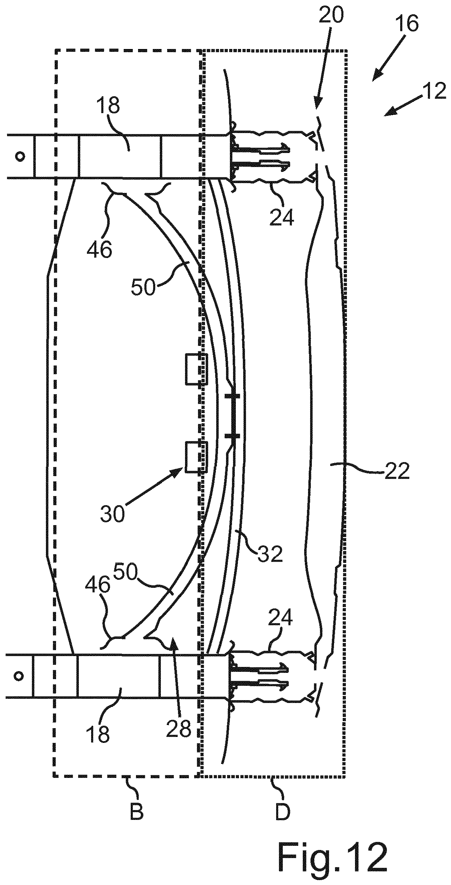

Fig. 1 zeigt in einer schematischen Perspektivansicht eine Karosserie für einen Personenkraftwagen, welcher in seinem vollständig hergestellten Zustand beispielsweise einen konventionellen Antrieb aufweist oder aber als Hybrid- oder Elektrofahrzeug ausgebildet sein kann. Die Karosserie weist an ihrer Front 10 und an ihrem Heck 12 jeweilige Karosseriestrukturen 14 und 16 auf, welche im Folgenden näher erläutert werden. Während Fig. 4 und 10 in einer jeweiligen schematischen Draufsicht die an der Front 10 der Karosserie angeordnete Karosseriestruktur 14 zeigen, zeigt Fig. 12 in einer schematischen Draufsicht die am Heck 12 der Karosserie angeordnete Karosseriestruktur 16. Besonders gut aus einer Zusammenschau von Fig. 1, 4, 10 und 12 ist erkennbar, dass die jeweilige Karosseriestruktur 14 beziehungsweise 16 zwei in Fahrzeugquerrichtung (y-Richtung) voneinander beabstandete Längsträger 18 aufweist, welche beispielsweisen Bestandteile des Karosserierohbaus sind. Die Karosseriestruktur 14 beziehungsweise 16 umfasst ferner eine Biegequerträgereinrichtung 20, welche sich in Fahrzeuglängsrichtung (x-Richtung) an die Längsträger 18 anschließt, das heißt auf die Längsträger 18 folgt. Bei der Karosseriestruktur 14 ist somit die Biegequerträgereinrichtung 20 in Fahrzeuglängsrichtung weiter vorne als die Längsträger 18 angeordnet. Bei der Karosseriestruktur 16 jedoch ist die Biegequerträgereinrichtung 20 in Fahrzeuglängsrichtung weiter hinten als die Längsträger 18 angeordnet. Somit folgt bei der Karosseriestruktur 14 die Biegequerträgereinrichtung 20 in Fahrzeuglängsrichtung nach vorne hin auf die Längsträger 18, während bei der Karosseriestruktur 16 die Biegequerträgereinrichtung 20 in Fahrzeuglängsrichtung nach hinten hin auf die Längsträger 18 folgt.

Die jeweilige Biegequerträgereinrichtung 20 ist vorzugsweise Teil einer in den Figuren nicht näher dargestellten Stoßfängeranordnung, welche eine einen Teil der Fahrzeugaußenhaut bildenden Stoßfängerverkleidung umfasst. Die jeweilige Biegequerträgereinrichtung 20 selbst umfasst wenigstens einen sich in beziehungsweise zumindest im Wesentlichen in Fahrzeugquerrichtung erstreckenden Biegequerträger 22, welcher im Zusammenhang mit der hier vorliegenden Erfindung auch als erster Biegequerträger bezeichnet wird. Des Weiteren ist je Längsträger 18 wenigstens ein oder genau ein Energieabsorptionselement 24 vorgesehen, welches häufig auch als Crashbox bezeichnet wird und bei einer insbesondere in Fahrzeuglängsrichtung (x-Richtung im Karosseriebau üblichen Koordinatensystems) wirkenden, unfallbedingten Kraftbeaufschlagung unter Energieverzehrung verformbar ist.

Das jeweilige Energieabsorptionselement 24 ist in Fahrzeuglängsrichtung zwischen dem jeweils zugehörigen Längsträger 18 und dem Biegequerträger 22 angeordnet und dabei einerseits an dem jeweiligen Längsträger 18 und andererseits an dem Biegequerträger 22 befestigt. Das Deformationsverhalten der Energieabsorptionselemente 24 ist so auf das der Längsträger 18 ausgelegt beziehungsweise abgestimmt, dass bei einer kollisionsbedingten Kraftbeaufschlagung des Biegequerträgers 22 sich die Energieabsorptionselemente 24 bereits energieverzehrend deformieren, während die dahinter angeordneten Längsträger 18 noch den Kollisionskräften standhalten. Vorzugsweise verformen sich die Längsträger 18 erst dann, wenn das jeweilige Energieabsorptionselement 24 quasi auf Block zusammengedrückt ist und die wirkenden Crashkräfte einen durch Materialauswahl und konstruktiven Maßnahmen der beziehungsweise an den Längsträgern 18 einen vorbestimmten Grenzwert überschreiten.

Besonders gut aus Fig. 4 ist erkennbar, dass die Energieabsorptionselemente 24 in einer gemeinsamen Befestigungsebene 26 an den Längsträger 18 befestigt sind. Bei dem in den Fig. veranschaulichten Ausführungsbeispiel verläuft die Befestigungsebene 26 zumindest im Wesentlichen senkrecht zur Fahrzeuglängsrichtung (x-Richtung) und spannt sich dabei in Fahrzeughochrichtung (z-Richtung) und Fahrzeugquerrichtung (y-Richtung) auf. Die Energieabsorptionselemente 24 sind aus Gründen der Montage und auch zu Reparaturzwecken vorzugsweise reversibel lösbar an den Längsträgern 18 befestigt. In bevorzugter Ausführungsform ist vorgesehen, dass die Energieabsorptionselemente 24 mit den Längsträgern 18 verschraubt sind, sodass die Befestigungsebene 26 eine Schraub- oder Anschraubebene ist, in der die Energieabsorptionselemente 24 und über diese der Biegequerträger 22 an den Längsträger 18 angeschraubt und somit angebunden sind. Da die Energieabsorptionselemente 24 mit den Längsträgern 18 und mit dem Biegequerträger 22 verbunden sind, ist der Biegequerträger 22 unter Vermittlung der Energieabsorptionselemente 24 an den Längsträgern 18 gehalten und somit an diese angebunden.

Gemäß einer ersten Ausführungsvariante der Karosseriestruktur sind die Energieabsorptionselemente jeweils - vorzugsweise formschlüssig - in den Endbereich des jeweiligen, zumindest im Anbindungsbereich hohlen Längsträgers eingeschoben, wobei der Überlappungsbereich des Energieabsorptionselements und des Längsträgers von mindestens einem Befestigungs-/Fixierelement, vorzugsweise einer Schraube, in Fahrzeugquerrichtung durchsetzt ist. Die sich in yz-Richtung aufspannende Befestigungsebene 26 verläuft hier durch das Befestigungs-/Fixierelement und in dem Fall, dass mehrere in Fahrzeuglängsrichtung einen Versatz zu einander aufweisende Befestigungs-/Fixierelemente vorgesehen sind, durch eines von diesen oder einer beispielsweise ausgemittelten Stelle zwischen den Befestigungs-/Fixierelementen. Gemäß einer zweiten Ausführungsvariante der Karosseriestruktur können die Energieabsorptionselemente auch stirnseitig am freien Endbereich des jeweiligen Längsträgers mittels einer Flanschverbindung befestigt werden, wobei in diesem Fall das mindestens eine Befestigungs-/Fixierelement, vorzugsweise Schraube, die Flansche in Fahrzeuglängsrichtung durchsetzt. Die sich in yz-Richtung aufspannende Befestigungsebene 26 verläuft hier durch die Flanschverbindung.

Um nun auf besonders bauraumgünstige Weise ein besonders vorteilhaftes Unfallverhalten realisieren zu können, umfasst die jeweilige Karosseriestruktur 14 beziehungsweise 16 ein jeweiliges Tragwerk 28, welches in Fahrzeugquerrichtung zwischen den Längsträgern 18 und -in Fahrzeughochrichtung (z-Richtung) gesehen- auf Höhe der Längsträger 18 angeordnet ist. Des Weiteren ist das jeweilige Tragwerk 28 -in Fahrzeuglängsrichtung und in Richtung des kollisionsbedingten Kräfteeintrags gesehenhinter beziehungsweise innenseitig der jeweiligen Befestigungsebene 26 angeordnet. Somit ist die Befestigungsebene 26 bei der an der Front 10 angeordneten Karosseriestruktur 14 in Fahrzeuglängsrichtung weiter vorne als das Tragwerk 28 angeordnet, sodass die Befestigungsebene 26 bei der Karosseriestruktur 14 in Fahrzeuglängsrichtung nach vorne hin auf das Tragwerk 28 folgt. Bei der Karosseriestruktur 16 jedoch ist die Befestigungsebene 26 in Fahrzeuglängsrichtung weiter hinten als das Tragwerk 28 angeordnet, sodass bei der Karosseriestruktur 16 die Befestigungsebene 26 in Fahrzeuglängsrichtung nach hinten hin auf das Tragwerk 28 folgt.

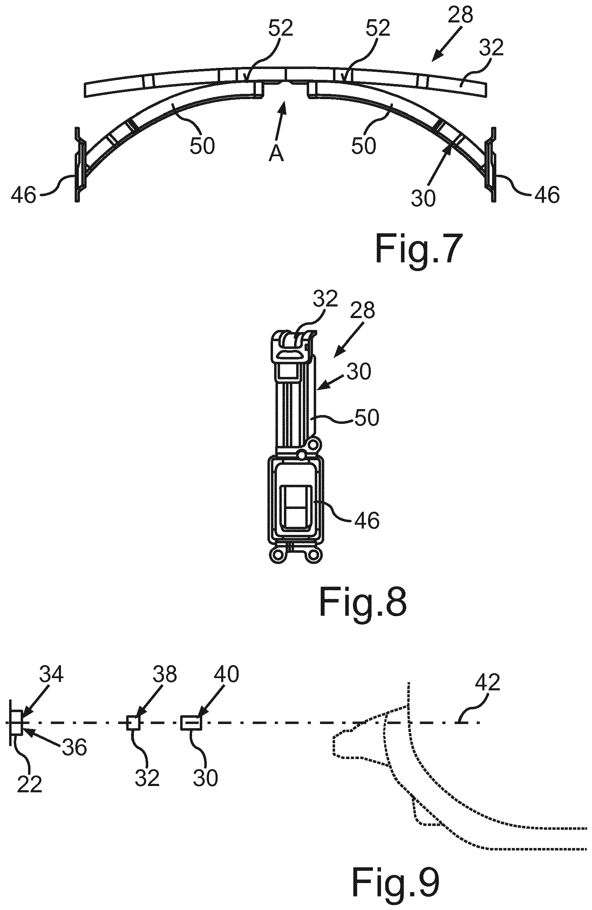

Das auch als Tragwerkstruktur bezeichnete Tragwerk 28 umfasst einen zweiten, sich zumindest im Wesentlichen in Fahrzeugquerrichtung erstreckenden Biegequerträger 30, welcher an seinen Enden beziehungsweise Endbereichen zumindest mittelbar an den Längsträgern 18 angebunden ist. Der Biegequerträger 30 des Tragwerks 28 wird im Zusammenhang mit der vorliegenden Erfindung auch als zweiter Biegequerträger bezeichnet. Des Weiteren umfasst das Tragwerk 28 einen Lastverteiler 32, welcher in Fahrzeuglängsrichtung zwischen den Biegequerträgern 22 und 30 und dabei insbesondere zwischen der Befestigungsebene 26 und dem Biegequerträger 30 angeordnet ist. Der Lastverteiler 32 kann grundsätzlich als gerader Balken mit beispielsweise einem Hohlquerschnitt ausgebildet sein. Bei dem in den Figuren dargestellten Ausführungsbeispiel ist der Lastverteiler 32 als ein solcher Balken mit einer leichten Krümmung versehen, wobei die Krümmung -bei in Draufsicht auf den Lastverteiler 32 gesehen- zur Fahrzeugaußenseite gerichtet ist, wie ohne weiteres aus Fig. 7 ersichtlich. Der Lastverteiler 32 erstreckt sich also zumindest im Wesentlichen in Fahrzeugquerrichtung und überspannt dabei im Wesentlichen den gesamten Freiraum zwischen den beiden Längsträgern 18, ohne dabei endseitig an den Längsträgern 18 befestigt zu sein. Vielmehr ist ein Spalt beziehungsweise Freiraum zwischen der Stirnseite des jeweiligen Längsträgers und der benachbart, das heißt gegenüberliegend angeordneten Innenseite des Längsträgers 18 vorgesehen. Dabei kann der Lastverteiler 32 in Fahrzeuglängsrichtung auf ihn wirkende, unfallbedingte Lasten (x-Kräfte) aufnehmen und auf den dahinter angeordneten Biegequerträger 30 übertragen.

Zur Funktionsweise des Tragwerks 28: Der Lastverteiler 32 und der Biegequerträger 30 werden durch die auftretende Kraft bei einem Fahrzeugcrash durch eine Unfallbarriere 44 annähernd in x-Richtung aktiviert. Dabei verteilt der balkenförmige Lastverteiler 32 die auftretende Last möglichst flächig über die Fahrzeugbreite und drückt auf den Biegequerträger 30. Durch die gekrümmte Form des Biegequerträgers 30 wird die in Fahrzeuglängsrichtung (x-Richtung) wirkende Kraft in eine in Fahrzeugquerrichtung (y-Richtung) wirkende Kraft übertragen, wodurch die bestehenden Längsträger 18 durch die Anbindung des Biegequerträger 30 über Anbindungskonsolen 46 in y-Richtung nach fahrzeugaußen deformiert werden und Crashenergie auf die stoßabgewandte Seite übertragen wird. Es findet also eine Übertragung der unfallbedingten Crashkräfte von in x-Richtung auf y-Richtung und damit auf die Längsträger 18 statt. Dabei ist das Tragwerk 28 insbesondere derart zwischen den Längsträgern 18 angeordnet, dass der jeweilige Längsträger 18 in Fahrzeugquerrichtung nach innen hin zumindest teilweise durch das Tragwerk 28 überdeckt ist. Über das jeweilige Tragwerk 28 werden die jeweiligen Längsträger 18 miteinander verbunden, um hierdurch bei einem Unfall sowohl eine Deformation in x- als auch eine Deformation in z-Richtung in dahinter liegenden Fahrzeugbauraum besonders gering halten zu können, wodurch übermäßige Intrusionen in den Personenkraftwagen beziehungsweise in dessen Innenraum vermieden werden können.

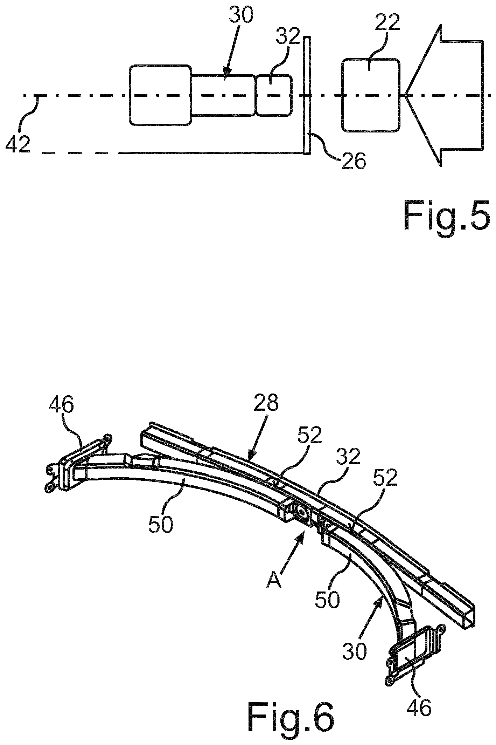

Aus Fig. 2 und 3 ist besonders gut die jeweilige Karosseriestruktur 14 und 16 sowie insbesondere deren jeweilige Anordnung bezogen auf die Karosserie insgesamt Zu erkennen ist, dass die in Fahrzeughochrichtung (z-Richtung) vorzugsweise auf gleicher oder zumindest gleicher Höhe angeordneten Biegequerträger 22 und 30 in x-Richtung in einem Abstand voneinander angeordnet sind und dabei parallel oder zumindest im Wesentlichen parallel zueinander verlaufen. Besonders gut aus Fig. 5 ist erkennbar, dass die Biegequerträger 22 und 30 und der Lastverteiler 32 in Fahrzeughochrichtung derart angeordnet sind, dass sich jeweilige, insbesondere geschlossene, Hohlquerschnitte 34, 36, 38 und 40 entlang der in Fig. 5 durch eine strichpunktierte Linie 42 veranschaulichten Fahrzeuglängsrichtung gegenseitig zumindest teilweise überdecken beziehungsweise überlappen. Hierdurch kann auf nur geringem Weg beziehungsweise in nur geringem Deformationsraum eine besonders hohe Menge an Unfallenergie in Deformationsenergie umgewandelt und dadurch absorbiert werden.

Des Weiteren zeigt Fig. 4 eine äußerst schematisch dargestellte Unfallbarriere 44, welche auf die Fahrzeugfront und damit auf die Karosseriestruktur 14 aufprallt. Zu erkennen ist, dass die Unfallbarriere 44 einen seitlichen Versatz zur Fahrzeugmitte aufweist, aber trotz des Seitenversatzes immer noch - in Aufprallrichtung gesehen- in Überdeckung mit einem der Längsträger 18 ist, so dass über den Biegequerträger 22 und dem Energieabsorptionselement 24 eine Abstützung der Crashkräfte beziehungsweise Einleitung derselben über den Endbereich des Längsträgers 18 in diesen erfolgt. Dabei ist in Fig. 4 ferner ein für einen solchen Frontalaufprall zur Verfügung stehender Deformationsbereich zwischen der Befestigungsebene 26 des Biegequerträgers 22 und jeweiligen Anbindungskonsolen 46 des Biegequerträgers 30 mit D bezeichnet. Der Deformationsbereich D steht bei einem solchen Frontalaufprall zur Verfügung, um Unfallenergie in Verformungsenergie umzuwandeln und somit zu absorbieren.

Grundsätzlich ist denkbar, dass der zweite Biegequerträger 30 direkt an die Längsträger 18 angebunden ist. Bei dem in den Fig. veranschaulichten Ausführungsbeispiel ist es jedoch vorgesehen, dass der zweite Biegequerträger 30 unter Vermittlung der separat von dem zweiten Biegequerträger 30 und separat von den Längsträgern 18 ausgebildeten, einfach auch als Konsolen bezeichneten Anbindungskonsolen 46 an die Längsträger 18 angebunden ist. Dabei sind die Anbindungskonsolen 46 mit dem Biegequerträger 30 und mit den Längsträgern 18 verbunden. Insbesondere ist die jeweilige Anbindungskonsole 46 an einer in Fahrzeugquerrichtung nach innen weisenden Innenseite 48 des jeweiligen Längsträgers 18 befestigt, sodass der zweite Biegequerträger 30 über die Anbindungskonsolen 46 und somit mittelbar an die Innenseiten 48 angebunden ist.

Fig. 6 zeigt das Tragwerk 28, welches beispielsweise bei der Karosseriestruktur 14 oder aber bei der Karosseriestruktur 16 zum Einsatz kommen kann. Bei dem in den Fig. veranschaulichten Ausführungsbeispiel ist der Lastverteiler 32 einteilig und somit als genau eine Baueinheit ausgebildet, welche als Ganzes gehandhabt und montiert werden kann. Der zweite Biegequerträger 30 kann grundsätzlich ebenfalls einteilig ausgebildet sein. Bei dem in den Fig. veranschaulichten Ausführungsbeispiel ist der zweite Biegequerträger 30 zweiteilig ausgebildet und weist dadurch wenigstens oder genau zwei separat voneinander ausgebildete Biegequerträgerteile 50 aufweist. Die Biegequerträgerteile 50 sind in Fahrzeugquerrichtung voneinander beabstandet angeordnet, sodass in Fahrzeugquerrichtung zwischen den Biegequerträgerteilen 50 ein Abstand A vorgesehen ist. Der Abstand A ist dabei durch den Lastverteiler 32 überbrückt, da der Lastverteiler 32 mit beiden Biegequerträgerteilen 50 zumindest mittelbar, insbesondere direkt, verbunden ist. Dabei sind die Biegequerträgerteile 50 in Fahrzeuglängsrichtung nach vorne beziehungsweise nach hinten jeweils zumindest teilweise durch den Lastverteiler 32 überdeckt.

Der zweite Biegequerträger 30 weist in Draufsicht eine deutliche Krümmung auf, wobei der mittlere Bereich des Biegequerträgers 30 einen geringeren Abstand zur Fahrzeugfront beziehungsweise zum Fahrzeugheck aufweist als dessen Endbereiche, die mittels der Anbindungskonsolen 46 innenseitig der Längsträger 18 angebracht sind. Die zur Fahrzeugaußenseite hin konvexe Ausbauchung des Biegequerträgers 30 bewirkt, dass bei einer Kraftbeaufschlagung des Lastverteilers in x-Richtung diese Kräfte in den Biegequerträger 30 eingeleitet und dort in y-Richtung wirkenden Kräfte seitlich in die Längsträger 18 eingeleitet werden.

Der Lastverteiler 32 ist beispielsweise direkt an dem Biegequerträger 30 beziehungsweise an den Biegequerträgerteilen 50 befestigt. Insbesondere ist beispielsweise der Lastverteiler 32 an dem Biegequerträger 30, insbesondere an die Biegequerträgerteile 50 angeschraubt. Besonders gut aus Fig. 6 ist erkennbar, dass der Lastverteiler 32 direkt an einer in Fahrzeuglängsrichtung dem ersten Biegequerträger 22 zugewandten Stirnseite 52 des Biegequerträgers 30 beziehungsweise des jeweiligen Biegequerträgerteils 50 befestigt ist und insbesondere die jeweilige Stirnseite 52 direkt berührt.

Fig. 7 zeigt das Tragwerk 28 in einer schematischen Draufsicht, während Fig. 8 das Tragwerk 28 in einer schematischen Seitenansicht zeigt. Aus Fig. 7 geht ohne weiteres hervor, dass der Lastverteiler 32 nur über einen relativ kleinen Teil seiner Gesamtlänge in Anlagekontakt mit dem zweiten Biegequerträger 30 steht, nämlich lediglich in zentralen, der Fahrzeuglängsmittelachse nahen Bereichen, während in den übrigen Längenbereichen des Lastverteilers 32 dieser in einem nach außen hin immer größer werdenden Abstand zum Biegequerträger 30 verläuft, was durch den bogenförmigen Verlauf des Biegequerträgers 30 einerseits und der als relativ geradem Balken ausgeführten Lasterverteiler 32 anderseits realisiert ist. Die Enden des Lastverteilers 32 weisen -in Fahrzeuglängsrichtung gesehen- einen relativ großen Abstand zu den Anbindungskonsolen 46 auf.

Aus Figur 8 ist ersichtlich, dass sich der Lastverteiler 32 und der zweite Biegequerträger 30 beziehungsweise die Biegequerträgerteile 50 sowie die Anbindungskonsole in einer flucht angeordnet sind, so dass im eingebauten, das heißt am Karosserierohbau montierten Zustand des Tragwerks dieses beziehungsweise dessen Teile in einer gedachten, horizontalen Ebene angeordnet sind, die sich in Fahrzeuglängs- und -querrichtung aufspannt und in z-Richtung auf Höhe der Längsträger 18 liegt.

Aus Fig. 9 ist erkennbar, dass der jeweilige Hohlquerschnitt 38 beziehungsweise 40 des Lastverteilers 32 beziehungsweise dies Biegequerträgers 30 als geschlossener Hohlquerschnitt ausgebildet ist. Der Biegequerträger 22 weist beispielsweise wenigstens zwei Kammern auf, welche in Fahrzeughochrichtung übereinander angeordnet sind und die jeweiligen, insbesondere geschlossenen, Hohlquerschnitte 34 und 36 bilden.

Fig. 10 zeigt die Karosseriestruktur 14 in einer weiteren schematischen Draufsicht. Besonders gut sind der Deformationsbereich D und ein sich in Fahrzeuglängsrichtung nach hinten an den Deformationsbereich D anschließender Aufnahmebereich B erkennbar, wobei beispielsweise der Aufnahmebereich B zumindest den zweiten Biegequerträger 30 umfasst und genutzt wird, um bei einem Unfall auftretende und insbesondere in die Fahrzeugquerrichtung wirkende Drehmomente aufzunehmen und abzustützen. Aus Figur 10 ist ohne weiteres ersichtlich, dass bei dem dargestellten Ausführungsbeispiel der Karosseriestruktur der Lastverteiler 32 in Fahrzeuglängsrichtung zumindest abschnittsweise auf Höhe der Befestigungsebene 26 der Energieabsorptionselemente 24 an den Längsträger 18 angeordnet ist in Richtung zum ersten Biegequerträger 22 hin gegebenenfalls auch hinausragt. Diese Anordnung ist für die originäre Funktion des Tragwerks ohne Einfluss.

Fig. 11 zeigt die Karosseriestruktur 16 am Heck 12 der Karosserie. Auch bei der Karosseriestruktur 16 sind der Biegequerträger 22, der Biegequerträger 30 und der Lastverteiler 32 in Fahrzeughochrichtung derart angeordnet, dass sich ihre jeweiligen, insbesondere geschlossenen, Hohlquerschnitte 34, 38 und 40 entlang der Fahrzeuglängsrichtung gegenseitig zumindest teilweise überdecken beziehungsweise überlappen. Dabei weist der Biegequerträger 22 der Karosseriestruktur 16 beispielsweise genau eine Kammer und somit genau einen, insbesondere geschlossenen, Hohlquerschnitt 34 auf. Außerdem zeigt Fig. 12 die Karosseriestruktur 16 in einer schematischen Draufsicht. Dabei sind in Fig. 12 der Deformationsbereich D und der Aufnahmebereich B der Karosseriestruktur 16 gezeigt.

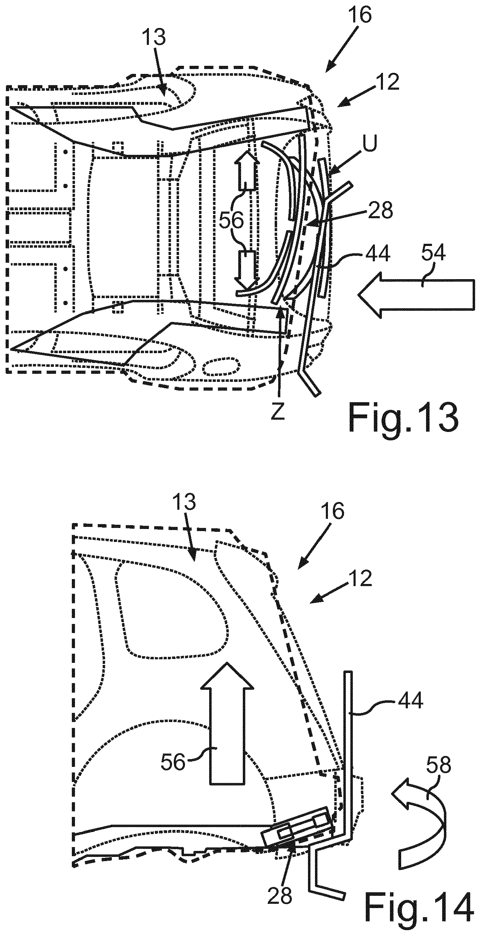

In Fig. 13 ist durch einen Pfeil 54 eine unfallbedingte Last veranschaulicht, welche beispielsweise aus einem Heckaufprall resultiert und in Fahrzeuglängsrichtung von hinten nach vorne auf die Karosseriestruktur 16 wirkt. Dabei ist in Fig. 13 eine aus der unfallbedingten Last resultierende Verformung der Karosseriestruktur 16 veranschaulicht. Dabei veranschaulichen Pfeile 56 Kräfte, die beispielsweise aus der unfallbedingten Last und aus der Verformung der Karosseriestruktur 16 resultieren und insbesondere in Fahrzeugquerrichtung nach außen wirken. In Fig. 13 ist mit U ein undeformierter Zustand der Karosseriestruktur 16 vor dem Heckaufprall bezeichnet, während mit Z der aus dem Heckaufprall resultierende deformierte Zustand der Karosseriestruktur 16 bezeichnet ist. Darüber hinaus veranschaulicht in Fig. 14 ein Pfeil 56 eine unfallbedingte, in Fahrzeughochrichtung insbesondere nach oben wirkende Last, und ein Pfeil 58 veranschaulicht beispielsweise ein unfallbedingtes und insbesondere in Fahrzeugquerrichtung wirkendes Drehmoment. Aus Fig. 13 und 14 ist besonders gut die Wirkweise der Karosseriestruktur 16 bei einem Heckaufprall erkennbar.

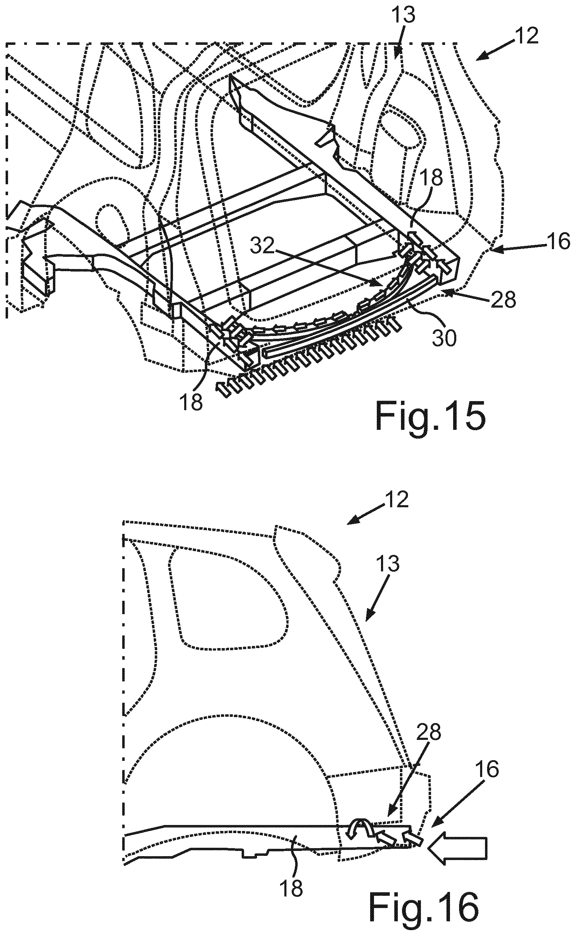

Schließlich veranschaulichen Fig. 15 und 16 durch jeweilige Pfeile eine durch die Karosseriestruktur 16 bewirkbare Kraftverteilung, in deren Rahmen unfallbedingte Lasten beziehungsweise Kräfte über die Karosseriestruktur 16 gezielt aufgenommen, geleitet und abgeführt werden, insbesondere derart, dass übermäßige Intrusionen vermieden werden können. Insgesamt ist aus den Fig. erkennbar, dass der jeweilige Lastverteiler 32 des Tragwerks 28 durch eine bei einem Frontal- beziehungsweise Heckaufprall auftretende Kraft und beispielsweise dann, wenn die Unfallbarriere 44 in Fahrzeuglängsrichtung nach hinten auf die Karosseriestruktur 14 beziehungsweise in Fahrzeuglängsrichtung nach vorne auf die Karosseriestruktur 16 auftrifft zumindest annähernd in Fahrzeuglängsrichtung aktiviert und dadurch beispielsweise - bei der Karosseriestruktur 14 - nach hinten beziehungsweise - bei der Karosseriestruktur 16 - nach vorne verformt wird. In Folge seiner Aktivierung verteilt der Lastverteiler 32 die auftretende Last möglichst flächig über die Fahrzeugbreite und drückt auf den zweiten, inneren Biegequerträger 30. Der Biegequerträger 30 ist in Richtung der einwirkenden Aufpralllast konvex und somit in Fahrzeuglängsrichtung nach außen gekrümmt. Durch diese, insbesondere in Fahrzeuglängsrichtung nach außen, gekrümmte Form des Biegequerträgers 30 wird beispielsweise eine zumindest im Wesentlichen in Fahrzeuglängsrichtung wirkende, unfallbedingte Kraft in eine zumindest im Wesentlichen in Fahrzeugquerrichtung, insbesondere nach außen, wirkende Kraft übertragen beziehungsweise umgewandelt, wodurch die Längsträger 18 durch die Anbindung des Tragwerks 28 über die Anbindungskonsolen 46 in Fahrzeugquerrichtung, insbesondere nach außen, kraftbeaufschlagt und bei Überschreiten einer Grenzkraft auch deformiert werden. Mittels des Tragwerks 28 wird also Unfallenergie auf die stoßabgewandte Seite übertragen, unabhängig davon, an welcher Stelle in Fahrzeugquerrichtung der Fahrzeugfront beziehungsweise dem Fahrzeugheck die Unfallkraft eingeleitet wird.

Insbesondere ist es vorgesehen, dass der Lastverteiler 32 zumindest oder ausschließlich über den Biegequerträger 30 sowie über die etwaig vorgesehenen Anbindungskonsolen 46 an die Längsträger 18 angebunden ist. Durch die flächige Anbindung des Tragwerks 28 über die Anbindungskonsolen 46 wird auch die im Verlauf des Frontalbeziehungsweise Heckaufpralls zusätzlich entstehende und beispielsweise durch den Pfeil 56 veranschaulichte und in Fahrzeughochrichtung wirkende Kraft sowie das daraus resultierende und beispielsweise durch den Pfeil 58 veranschaulichte Drehmoment übertragen. Dabei hat es sich als besonders vorteilhaft gezeigt, wenn die Anbindungskonsolen 46 in mehreren, in Fahrzeuglängsrichtung und in Fahrzeughochrichtung versetzten Befestigungspunkten an den jeweiligen Längsträgern 18 befestigt sind. Durch die in Fahrzeuglängsrichtung zur Befestigungsebene 26 des Biegequerträgers 22 versetzte Anordnung der Anbindungskonsolen 46 werden die unfallbedingten Kräfte zusätzlich weiter vorne beziehungsweise hinten in den jeweiligen Längsträger 18 eingeleitet, wodurch die Krafteinleitung in die Längsträger 18 verbessert wird, da ein Knicken des jeweiligen Längsträgers 18 um die Fahrzeugquerrichtung gering gehalten werden kann. Zusätzlich entsteht durch diese Anordnung zwischen der Befestigungsebene 26 und den Anbindungskonsolen 46 der Deformationsbereich D am jeweiligen Längsträger 18, insbesondere an demjenigen Längsträger 18, auf dessen Seite die Unfallbarriere 44 auf die Karosseriestruktur 14 beziehungsweise 16 prallt.

In einer frühen Phase des Unfalls wird dadurch derjenige der Längsträger 18, der auf der Seite angeordnet ist, auf der die Unfallbarriere 44 auf die Karosseriestruktur 14 beziehungsweise 16 prallt, in diesem Bereich teilweise entlastet und kann dort, initiiert über die Energieabsorptionselemente 24, kontrolliert deformieren, während der andere, stoßabgewandte Längsträger 18 zusätzlich belastet und die Gesamtdeformation in Fahrzeuglängsrichtung und in Fahrzeughochrichtung reduziert wird.

## Patentansprüche

1. Karosseriestruktur (14, 16) für einen einen Karosserierohbau (13) aufweisenden Personenkraftwagen, mit zwei in Fahrzeugquerrichtung voneinander beabstandeten Längsträgern (18) und mit wenigstens einer sich in Fahrzeuglängsrichtung an die Längsträger (18) anschließenden Biegequerträgereinrichtung (20), welche Teil einer Stoßfängeranordnung ist und einen ersten Biegequerträger (22) sowie an den Längsträgern (18) befestigte Energieabsorptionselemente (24) umfasst, über welche der erste Biegequerträger (22) an den jeweiligen Längsträger (18) angebunden ist, wobei ein Tragwerk (28) vorgesehen ist, welches zwischen den Längsträgern (18) und - in Fahrzeughochrichtung gesehen - auf Höhe der Längsträger (18) angeordnet ist, wobei das Tragwerk (28) einen zweiten, zumindest mittelbar an die Längsträger (18) angebundenen, in Draufsicht auf die Karosseriestruktur (14, 16) gesehen zur Fahrzeugaußenseite in Richtung zum ersten Biegequerträger (22) hin konvex gekrümmten Biegequerträger (30) aufweist, **dadurch gekennzeichnet, dass** das Tragwerk (28) einen in Fahrzeuglängsrichtung zwischen dem ersten Biegequerträger (22) und dem zweiten Biegequerträger (30) angeordneten, sich in Fahrzeugquerrichtung erstreckenden Lastverteiler (32) aufweist.

2. Karosseriestruktur nach Anspruch 1,
**dadurch gekennzeichnet, dass**
der Lastverteiler (32) am zweiten Biegequerträger (30) so befestigt oder ausgebildet ist, dass die freien Enden des Lastverteilers (32) verbindungsfrei zu den Längsträgern (18) sind.

3. Karosseriestruktur nach Anspruch 1 oder 2,
**dadurch gekennzeichnet, dass**
der Lastverteiler (32) balkenförmig ausgebildet ist.

4. Karosseriestruktur nach einem der vorhergehenden Ansprüche,
**dadurch gekennzeichnet, dass**
der Lastverteiler (32) zumindest mittelbar an einer in Fahrzeuglängsrichtung dem ersten Biegequerträgers (22) zugewandte Stirnseite (52) des zweiten Biegequerträgers (30) befestigt ist.

5. Karosseriestruktur nach einem der vorhergehenden Ansprüche,
**dadurch gekennzeichnet, dass**
die Biegequerträger (22, 30) und der Lastverteiler (32) zumindest in jeweiligen Längenbereichen jeweilige, sich entlang der Fahrzeuglängsrichtung gegenseitig zumindest teilweise überlappende Hohlquerschnitte (34, 36, 38, 40) aufweisen.

6. Karosseriestruktur nach einem der vorhergehenden Ansprüche,
**dadurch gekennzeichnet, dass**
der zweite Biegequerträger (30) so an den Längsträgern (18) angebunden ist, dass sich bei einer in Fahrzeuglängsrichtung wirkenden Kraftbeaufschlagung des zweiten Biegequerträgers (30) ein Lastpfad über diesen auf jeweilige, in Fahrzeugquerrichtung nach innen weisende Innenseiten (48) der jeweiligen Längsträger (18) ausbilden kann.

7. Karosseriestruktur nach einem der vorhergehenden Ansprüche,
**dadurch gekennzeichnet, dass**
der zweite Biegequerträger (30) zumindest mittelbar an die einander gegenüberliegend angeordneten Innenseiten (48) der jeweiligen Längsträger (18) angebunden ist.

8. Karosseriestruktur nach einem der vorhergehenden Ansprüche,
**dadurch gekennzeichnet, dass**
das zweite Biegequerträger (30) unter Vermittlung jeweiliger, separat von dem zweiten Biegequerträger (30) und separat von den Längsträgern (18) ausgebildeter und mit dem zweiten Biegequerträger (30) verbundener Konsolen (46) an die jeweiligen Längsträger (18) angebunden ist.

9. Karosseriestruktur nach einem der vorhergehenden Ansprüche,
**dadurch gekennzeichnet, dass**
der Lastverteiler (32) ein- oder mehrteilig ausgebildet ist.

10. Karosseriestruktur nach einem der vorhergehenden Ansprüche,
**dadurch gekennzeichnet, dass**
der zweite Biegequerträger (30) einteilig und dadurch als genau eine Baueinheit ausgebildet ist.

11. Karosseriestruktur nach einem der Ansprüche 1 bis 9,
**dadurch gekennzeichnet, dass**
der zweite Biegequerträger (30) mehrteilig ausgebildet ist und dadurch wenigstens zwei separat voneinander ausgebildete Biegequerträgerteile (50) aufweist, welche in Fahrzeugquerrichtung in einem Abstand (A) zueinander angeordnet sind, welcher durch den Lastverteiler (32) überbrückt ist.

12. Montagebauteil für eine Karosseriestruktur nach einem der Ansprüche 1 bis 11, umfassend den zweiten Biegequerträger (30), welcher an seinen Enden mit jeweils einer Konsole (46) zur Befestigung desselben an den Innenseiten (48) der Längsträger (18) versehen ist, und den am zweiten Biegequerträger (30) vorgesehenen Lastverteiler (32).

13. Karosserie für einen Personenkraftwagen, mit einem Rohbau (13) und mit einer Karosseriestruktur (14, 16) nach einem der vorhergehenden Ansprüche, wobei das Tragwerk (28) zerstörungsfrei lösbar an dem Rohbau (13) befestigt ist.

## Claims

1. Body structure (14, 16) for a passenger car having a body shell (13), with two side members (18) spaced from each other in the transverse direction of the vehicle and with at least one bending crossmember device (20), which adjoins the side members (18) in the longitudinal direction of the vehicle, is part of a bumper assembly and comprises a first bending crossmember (22) and energy absorption elements (24), which are mounted on the side members (18) and by way of which the first bending crossmember (22) is joined to the respective side member (18), wherein there is provided a support structure (28) located between the side members (18) and - viewed in the vertical direction of the vehicle - at the level of the side members (18), wherein the support structure (28) has a second bending crossmember (30), which is at least indirectly joined to the side members (18) and has a convex curvature towards the outside of the vehicle in the direction towards the first bending crossmember (22) in a top view of the body structure (14, 16),
**characterised in that**
the support structure (28) has a load divider (32) located between the first bending crossmember (22) and the second bending crossmember (30) in the longitudinal direction of the vehicle and extending in the transverse direction of the vehicle.

2. Body structure according to claim 1,
**characterised in that**
the load divider (32) is secured to the second bending crossmember (30) or designed in such a way that the free ends of the load divider (32) are not joined to the side members (18).

3. Body structure according to claim 1 or 2,
**characterised in that**
the load divider (32) is designed to be beam-shaped.

4. Body structure according to any of the preceding claims,
**characterised in that**
the load divider (32) is at least indirectly secured to an end face (52) - facing the first bending crossmember (22) in the longitudinal direction of the vehicle - of the second bending crossmember (30).

5. Body structure according to any of the preceding claims,
**characterised in that**
the bending crossmembers (22, 30) and the load divider (32) have, at least in respective length regions, respective hollow cross-sections (34, 36, 38, 40), which at least partially overlap in the longitudinal direction of the vehicle.

6. Body structure according to any of the preceding claims,
**characterised in that**
the second bending crossmember (30) is joined to the side members (18) in such a way that, if a force is applied to the second bending crossmember (30) in the longitudinal direction of the vehicle, a load path can form via it towards respective insides (48) - pointing inwards in the transverse direction of the vehicle - of the respective side members (18).

7. Body structure according to any of the preceding claims,
**characterised in that**
the second bending crossmember (30) is at least indirectly joined to the oppositely located insides (48) of the respective side members (18).

8. Body structure according to any of the preceding claims,
**characterised in that**
the second bending crossmember (30) is joined to the respective side members (18) by the agency of respective brackets (46) formed separately from the second bending crossmember (30) and separately from the side members (18) and connected to the second bending crossmember (30).

9. Body structure according to any of the preceding claims,
**characterised in that**
the load divider (32) is designed as a single part or in several parts.

10. Body structure according to any of the preceding claims,
**characterised in that**
the second bending crossmember (30) is designed as a single part, thus forming precisely one modular unit.

11. Body structure according to any of claims 1 to 9,
**characterised in that**
the second bending crossmember (30) is designed in several parts, thus having at least two bending crossmember parts (50) formed separately, which are arranged at a distance (A) bridged by the load divider (32) from each other in the transverse direction of the vehicle.

12. Assembly parts for a body structure according to any of claims 1 to 11, comprising the second bending crossmember (30), which is provided at its ends with a bracket (46) each for securing to the insides (48) of the side members (18), and the load divider (32) provided at the second bending crossmember (30).

13. Body for a passenger car, with a body shell (13) and with a body structure (14, 16) according to any of the preceding claims, wherein the support structure (28) is releasably secured to the body shell (13) in a non-destructive manner.

## Revendications

1. Structure de carrosserie (14, 16) pour une voiture de tourisme comprenant une coque (13), comportant deux longerons de châssis (18) espacés l'un de l'autre dans la direction transversale de véhicule et comportant au moins un dispositif de barre transversale pliée (20) se reliant dans la direction longitudinale de véhicule aux longerons de châssis (18), le dispositif de barre transversale pliée étant une partie d'un système de pare-chocs et comprenant une première barre transversale pliée (22) ainsi que des éléments d'absorption d'énergie (24) fixés sur les longerons de châssis (18), lesdits éléments d'absorption d'énergie permettant de relier la première barre transversale pliée (22) au longeron de châssis respectif (18),
dans laquelle il est prévu un châssis (28) qui est disposé entre les longerons de châssis (18) et - observé dans la direction verticale de véhicule - à hauteur des longerons de châssis (18), et dans laquelle le châssis (28) comporte une seconde barre transversale pliée (30), au moins reliée directement aux longerons de châssis (18), observée de dessus sur la structure de carrosserie (14, 16), incurvée de manière convexe par rapport au côté extérieur de véhicule dans la direction de la première barre transversale pliée (22), **caractérisée en ce que**
le châssis (28) comporte un répartiteur de charge (32) disposé dans la direction longitudinale de véhicule entre la première barre transversale pliée (22) et la seconde barre transversale pliée (30), s'étendant dans la direction transversale de véhicule.

2. Structure de carrosserie selon la revendication 1,
**caractérisée en ce que** le répartiteur de charge (32) est fixé ou conçu sur la seconde barre transversale pliée (30) de manière à ce que les extrémités libres du répartiteur de charge (32) soient libres de fixation par rapport aux longerons de châssis (18).

3. Structure de carrosserie selon la revendication 1 ou 2,
**caractérisée en ce que** le répartiteur de charge (32) est conçu sous la forme de type poutre.

4. Structure de carrosserie selon l'une quelconque des revendications précédentes,
**caractérisée en ce que** le répartiteur de charge (32) est fixé au moins directement sur un côté avant (52) de la seconde barre transversale pliée (30) orienté vers la première barre transversale pliée (22) dans la direction longitudinale de véhicule.

5. Structure de carrosserie selon l'une quelconque des revendications précédentes,
**caractérisée en ce que** les barres transversales pliées (22, 30) et le répartiteur de charge (32) au moins dans des zones longitudinales respectives, comportent des sections transversales creuses (34, 36, 38, 40) se chevauchant au moins à certains endroits de chaque côté dans la direction longitudinale de véhicule.

6. Structure de carrosserie selon l'une quelconque des revendications précédentes,
**caractérisée en ce que** la seconde barre transversale pliée (30) est reliée aux longerons de châssis (18) de manière à ce que, lors d'une application de force de la seconde barre transversale pliée (30) agissant dans la direction longitudinale de véhicule, un chemin de charge puisse se former au-dessus de ceux-ci sur respectivement les côtés intérieurs (48) des longerons de châssis (18) respectifs orientés vers l'intérieur dans la direction transversale du véhicule.

7. Structure de carrosserie selon l'une quelconque des revendications précédentes,
**caractérisée en ce que** la seconde barre transversale pliée (30) est reliée au moins directement aux côtés intérieurs (48) des longerons de châssis (18) respectifs disposés en regard les uns des autres.

8. Structure de carrosserie selon l'une quelconque des revendications précédentes,
**caractérisée en ce que** la seconde barre transversale pliée (30) par l'intermédiaire de consoles (46) respectivement, séparées de la seconde barre transversale pliée (30) et séparées des longerons de châssis (18), conçues et reliées à la seconde barre transversale pliée (30), est reliée aux longerons de châssis (18) respectifs.

9. Structure de carrosserie selon l'une quelconque des revendications précédentes,
**caractérisée en ce que** le répartiteur de charge (32) est conçu en une ou plusieurs parties.

10. Structure de carrosserie selon l'une quelconque des revendications précédentes,
**caractérisée en ce que** la seconde barre transversale pliée (30) est conçue en un seul tenant et forme ainsi précisément une unité modulaire.

11. Structure de carrosserie selon l'une quelconque des revendications 1 à 9,
**caractérisée en ce que** la seconde barre transversale pliée (30) est conçue en plusieurs parties et ainsi comporte au moins deux parties de barre transversale pliée (50) séparées l'une de l'autre, qui sont disposées dans la direction transversale de véhicule à une distance (A) l'une de l'autre, ladite distance est comblée par le répartiteur de charge (32).

12. Pièce structurale de fixation pour une structure de carrosserie selon l'une quelconque des revendications 1 à 11, comprenant les deux barres transversales pliées (30), ladite pièce étant pourvue sur ses extrémités respectivement d'une console (46) servant à leur fixation sur les côtés intérieurs (48) des longerons de châssis (18), et du répartiteur de charge (32) prévu sur la seconde barre transversale pliée (30).

13. Carrosserie pour une voiture de tourisme, comprenant une coque (13) et une structure de carrosserie (14, 16) selon l'une quelconque des revendications précédentes, dans laquelle le châssis est fixé amovible à la coque (13) de façon non destructive.
